# EUROPEAN PATENT APPLICATION

(11) **EP 0 846 419 A1**
(43) Date of publication of application: **10.06.1998**
(21) Application number: 97870198.5
(22) Date of filing: 05.12.1997
(51) Int. Cl.: A21B 3/13

(54) **Plastic baking tin**

(30) Priority: 05.12.1996 BE 9601015
(71) Applicant: Sileto, 2550 Kontich (BE)
(72) Inventor: Van Adorp, Marc, 2550 Kontich (BE); Costers, Maria Madeleine, 2550 Kontich (BE)
(74) Representative: Claeys, Pierre

(57) **Abstract**

This invention relates to a baking tin for ovens, which baking tin comprises a bottom (1) and at least one side wall (2, 3, 4, 5) and is made of a plastic material, whereby the plastic material has a heat deflection temperature of at least 180 °C, and the bottom (1) and the at least one side wall (2, 3, 4, 5) are built up of one continuous layer, and have a thickness of minimum approximately 1.5 mm and maximum approximately 4 mm. With such a baking tin, the sticking of dough to the walls can essentially be prevented, without having to grease the baking tin to that end. The baking tin may at the top be provided with a rim (6) to obtain an improved dimensional stability.

## Description

The present invention relates to a baking tin according to the preamble of the first claim.

Such baking tins can for example be used for baking various kinds of baking products, for example bread, sponge-cake, cake and other pastry.

To that end, the baking tin is first greased and then filled with a quantity of dough at room temperature. The filled baking tin is put into an oven at high temperature for a predetermined period of time, so as to bake baking products. Common oven temperatures are between 175 and 250 °C. Frequently used oven temperatures for baking bread in industrial bakeries are around 190 °C. In order to allow this temperature to be maintained during the whole baking time, the temperature of the empty oven is set at about 230 °C. Then the dough filled baking tins are put into the oven. Because the temperature of the dough filled baking tins is much lower than the oven temperature, the oven temperature will decrease to about 190 °C. Upon completion of the baking process, the baking tins are removed from the oven, and the baking products are removed from the forms. The baking tins may subsequently be reused.

In practice, moreover, it appeared that the precise setting and maintenance of a constant oven temperature can only be achieved with very few ovens. In addition thereto, the real oven temperature is mostly higher than the set temperature.

From CA-A-1,254,694 it is known to manufacture baking tins from a polycarbonate composition in which repeating polyether sulphone units are built in. The composition is extruded to a sheet with a thickness of 0.25-0.625 mm. To manufacture the baking tin, the sheet is hot formed in a mould.

It is the aim of this invention to provide a baking tin in which the sticking of dough residues to the walls of the baking tin can be substantially prevented.

Namely, in industrial bakeries it is desirable that the baking tins be used as frequently as possible in succession, without necessitating an intermediate cleaning. Such a cleaning is mostly carried out on an industrial scale and is expensive.

This is achieved according to the invention with the measures described in the characterizing part of the first claim.

The heat deflection temperature is that temperature whereby an arbitrary deformation occurs, when a material is subjected to a tensile force, while being heated. The heat deflection temperature (HDT) is the heat deflection temperature measured according to the ASTM D648 and/or DIN 5364 standards at a load of 1820 kPa.

Although plastic materials are generally bad heat conductors, the heating of the dough by conduction heat originating from the baking tin, at a wall thickness of minimum 1.5 mm, proceeds sufficiently fast to prevent the dough from sticking to the baking tin. Baking tins having a wall thickness smaller than about 1.5 mm show a decreased heat resistance and dimensional stability. They suffer from undesirable deformation at the common oven temperatures of 190-230 °C.

Baking tins having a wall thickness above about 4 mm, conduct the oven heat too slowly, so that the dough sticks to the walls.

Because the side walls and the bottom of the baking tin according to the invention are made of one continuous plastic material layer, a baking tin with an homogeneous composition and construction can be obtained. The mechanical and thermal properties of such an homogeneous baking tin are almost uniform over the entire form.

In its description, CA-1,254,694 discloses that the thickness of plastic material sheets for manufacturing baking tins is preferably 0.25-0.625 mm. In the examples on the other hand, in order to test the heat stability of the sheets, always two plastic sheets, one on top of the other, are used, whereby each sheet has a thickness of about 1 mm. The reason for the use of such a thickness, which is contradictory to the ideal thickness mentioned in the description, has to be found in the methods which are used in practice to test the mechanical and thermal properties of plastic materials. In order to allow a reproducible and sufficiently precise measurement of the mechanical and thermal properties of a plastic material plate or sheet, such a sheet must have a minimum thickness, which is often close to 1-3 mm. This is generally known to the man skilled in the art, and is as such indicated in the description of the measuring methods. Two sheets lying one on top of the other moreover have another mechanical and thermal behaviour than a single sheet of which the thickness is equal to the sum of the thicknesses of the separate sheets. The presence of an air layer between the sheets influences both the thermal and mechanical properties.

Surprisingly it has been found that it is not necessary to grease the baking tin according to the invention before it is filled with dough, in order to avoid the undesirable sticking of dough residues to the walls. This is an advantage not to be ignored, since the greasing is a time consuming and laborious job. Upon completion of the baking process, the baking products can be easily removed from the baking tin in their entirety, without having to grease the baking tin. They almost fall out when the baking tin is turned upside down, without having to use an aid, or having to knock off the baking products from the form. Such manipulations often result in an undesirable deformation of the baking tin.

Since, according to this invention it is not necessary to grease the baking tins prior to the baking process, and since the sticking of dough residues to the walls can be essentially prevented, the frequency with which the baking tins have to be cleaned, can be substantially reduced. This leads to a costs saving which is not to be ignored.

Moreover, it is not necessary to "bake in" the baking tin according to the invention before it is used for the first time. For the process of "baking in", the baking tin is greased and put empty into the oven for a predetermined period of time at a rather high temperature. During this baking in, a film is deposited onto the wall of the baking tin, which facilitates the removal of the baking products upon completion of the baking process.

According to the invention it is also possible to obtain a baking tin which is made of one piece. Such a baking tin does not show undesirable folded edges, for example to join the side walls. Such a baking tin neither shows any undesirable weld points to attach these edges to the baking tin.

In order to obtain an improved heat resistance of the bottom, the bottom of the baking tin according to the invention has preferably a larger thickness than the side walls. The thickness of the bottom is preferably minimum about 2 mm and maximum about 2.5 mm. In effect, the baking tin rests onto the baking trays in an oven with its bottom wall. The baking trays mostly have a higher temperature than the surrounding air, so that the heat resistance of the bottom of the baking tin should be preferably as good as possible.

The thickness of the side walls is preferably minimum 1.8 mm and maximum 2.5 mm. Within these boundaries, an optimal balance is obtained between a sufficient dimensional stability and sufficient heat conduction in order to essentially prevent the sticking of dough to the walls of the baking tin, without having to grease the baking tin.

The baking tin according to the invention may be made of various types of plastic materials, for example polyether imides (PEI), polyaryl ether ketones, for example polyethyl ether ketone (PEEK), liquid crystalline polymers and polyether sulphones. Preferably a plastic material is used which is suitable for foodstuffs and complies with the EEC directive 90/128 dated 23-02-1990.

The baking tin according to the invention is preferably made of a polyether sulphone. This way, it is possible to obtain an inexpensive baking tin, which nevertheless shows a sufficient thermal and dimensional stability at the commonly applied oven temperatures.

A baking tin made of polyether sulphone shows a small degree of wear. A baking tin made of polyether sulphone may thus be used for a long time, without necessitating replacement, which leads to a genuine costs saving.

The baking tin according to the invention may also be made of polyethyl ether ketone (PEEK). Such a baking tin shows an excellent dimensional stability at the common oven temperatures. Polyethyl ether ketone (PEEK) is a linear aromatic poly(aryl ether ketone) which corresponds to the formula

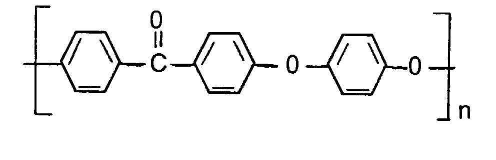

Baking tins made of such plastic materials have an inert surface, enabling to prevent the sticking of dough to the walls.

According to the invention, additives, for example release agents, may optionally be added to the polyether sulphone, polyether imide or polyethyl ether ketone. By adding such release agents, it is possible to further improve the loosening of the baking products from the baking tin. Such release agents are preferably applied in baking tins for baking products with a high sugar content.

By making the baking tin according to the invention of a plastic material containing a fibrous reinforcing material, it is possible to increase the stiffness and strength of the baking tin.

According to the invention, long, continuous fibres may be used as fibrous reinforcing material. Suitable examples of continuous fibres are fibre mats and fibre strands. According to the invention, also short, loose fibres may be used as fibrous reinforcing material.

Suitable types of fibres are for example glass fibres, carbon fibres and fibres of a plastic material. According to the invention, preferably short, loose glass fibres are applied as a fibrous reinforcing material. Such glass fibres are inexpensive and provide a baking tin with a good stiffness and strength.

The amount of fibrous reinforcing material may be varied within a broad range, and amounts mostly to 15-50 wt%, preferably 20-40 wt%.

In industrial bakeries it is desirable that a plurality of baking tins can be simultaneously moved into and out of the oven, in order to realise an optimal saving of time.This may be achieved, among others, by putting several baking tins, for example three or four, within a frame, provided with openings in which the baking tins fit. Between the openings, supporting edges are provided, onto which the rims of the baking tins may be supported.

Such a frame may also contain means for removably attaching the baking tins in the frame.

The baking tins according to the invention are mostly manufactured by means of injection moulding. To that end, an amount of plastic material which is either or not provided with fibrous reinforcing material, is injected, in the molten state, under pressure, into a mould. The mould has a cavity in the shape of the baking tin. After the baking tin has been compressed during a predetermined period of time, the baking tin is removed from the mould and the tin is allowed to further cool down. Such baking tins manufactured by means of injection moulding have a flush, smooth wall showing no roughness, which further reduces the probability of dough sticking to the wall of the baking tin. By means of injection moulding moreover large numbers of baking tins may be manufactured in a fast and an economically feasible way.

The baking tins according to the invention can be produced in any desired colour. To that end, an amount of the desired pigment is mixed with the plastic material. The pigment may be premixed with the plastic material by the manufacturer. It is also possible to mix the pigment with the plastic material, shortly before the injection moulding, before the plastic material is molten.

The baking tin according to the invention can be made in any desired shape and any desired dimensions. This can be realised by altering the shape and dimensions of the mould accordingly. The baking tin according to the invention may for example be round or oval for baking cakes and sponge-cake, or have an elongated or square shape, for example for baking bread.

The baking tin according to the invention may also contain additional decorative elements, for example a decorative relief, for example in the bottom or in the side wall. The side wall may be provided with corrugations and hollowings. This allows to make baking products with a specific decorative shape or baking products provided with a decorative element, for example in the shape of an animal. Such forms are often used to bake pies, cake, etc. Because the baking tins according to the invention are manufactured by means of injection moulding in a mould, it is possible to manufacture in a relatively simple and fast way a large quantity of baking tins provided with decorative elements.

The invention is further elucidated by means of the attached figures, description of the figures, and the examples.
Figure 1 shows a side view, and a partial cross section of an elongated baking tin according to the invention;
Figures 2a and 2b respectively show an elongated and round baking tin in perspective;
Figure 3 shows an injection moulding device for manufacturing the baking tin according to the invention.

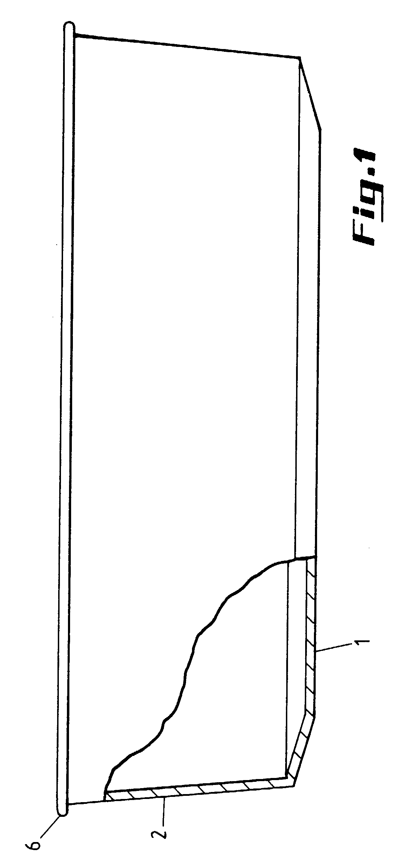

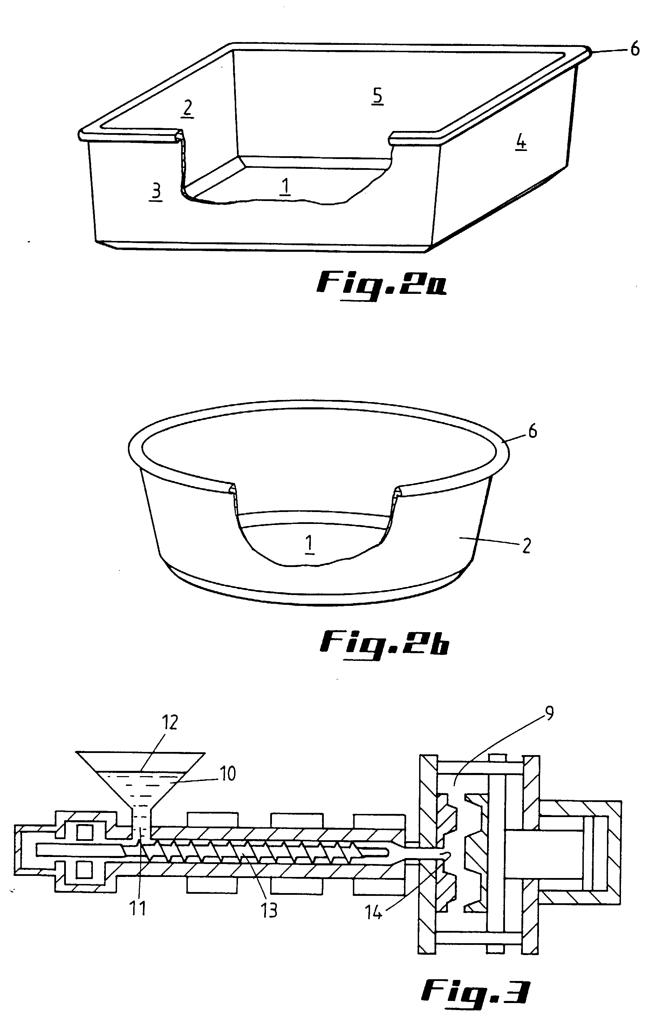

The baking tins shown in figures 1 and 2 comprise a bottom wall 1 and at least one side wall 2. In the case of a round or oval baking tin, the baking tin comprises one continuous side wall 2 (figure 2b). An elongated (figure 2a) or square baking tin preferably comprises four side walls 2, 3, 4, 5. The side walls 2-5 and bottom 1 turn seamlessly, continuously into each other. The side walls 2-5 turn seamlessly, continuously into the bottom 1. The baking tin is weldless.

The baking tin preferably also has an upper rim 6, which extends substantially parallel to the bottom 1. The upper rim 6 may be a small rim to improve the dimensional stability of the baking tin. The upper rim 6 may also be a protruding rim. Such a protruding rim is mostly provided when it is the intention to move several baking tins simultaneously into and out of the oven. In that case, a frame with openings is used, in which the baking tins fit. The baking tin then rests with its rim 6 onto the support rims between the openings.

The side walls 2-5 are preferably made up of two parts. A first part 7 joining the upper rim 6 preferably extends under an angle of 5 ° with respect to a vertical axis extending perpendicularly to the bottom 1. A second part 8 joining the bottom 1 extends at a larger angle with respect to the vertical axis extending perpendicularly to the bottom 1.

The baking tin according to the invention is preferably manufactured by means of injection moulding. An injection moulding device shown in figure 3 mostly comprises a metering funnel 12 with an outlet 11 for feeding the plastic material 10 to an extruder screw 13 for melting the plastic material 10. The device comprises a mould 9 for moulding the baking tin. The mould 9 is provided with an injection opening 14, for injecting plastic material and fibrous reinforcing material. The mould 9 can be heated.

When manufacturing the baking tin according to the invention by means of injection moulding, an amount of plastic material and fibrous reinforcing material 10 is metered through the outlet 11 of the metering funnel 12 to the extruder screw 13. The plastic material 10 is molten in the extruder screw 13 and then injected through the injection opening 14 into the mould 15. The temperature of the extruder screw is adjusted to the melting temperature of the applied plastic material. The temperature of the mould is preferably adjusted to the optimal processing temperature of the plastic material. The baking tin is compressed in the mould during a predetermined time and subsequently removed from the mould 15 to cool down.

When the baking tin is removed from the mould, the surface is preferably polished to obtain a very flush surface and to further reduce the probability of sticking of dough residues.

### Example

250 g polyether imide (PEI) of the ULTEM® type (General Electrics Plastics B.V. Holland) was pre-dried for four hours at 150-165 °C. Then the PEI was molten in an extruder screw with an L/S ratio of at least 22D, at a temperature between 360-400 °C, and injected into a mould. The mould had a temperature of 150-165 °C, the pressure amounted to at least 1500 bar. A baking tin in one piece was obtained, showing no undesirable seams and having a flush surface. The wall thickness was about 2 mm. The filled baking tin is resistant to an oven temperature of 230 °C. The baking tin was used to bake a bread. No dough residues remained stuck to the walls.

## Claims

1. Baking tin for ovens, which baking tin comprises a bottom (1) and at least one side wall (2, 3, 4, 5) and is made of a plastic material, characterized in that the plastic material has a heat deflection temperature of at least 180 °C, and that the bottom (1) and the at least one side wall (2, 3, 4, 5) are built up of one continuous layer, and have a thickness of minimum approximately 1.5 mm and maximum approximately 4 mm.

2. Baking tin according to claim 1, characterized in that the at least one side wall (2, 3, 4, 5) has a thickness of minimum aproximately 1.8 mm and maximum approximately 2.5 mm.

3. Baking tin according to claim 1 or 2, characterized in that the bottom (1) has a larger thickness than the at least one side wall (2, 3, 4, 5).

4. Baking tin according to any one of claims 5 or 6, characterized in that the bottom (1) ) has a thickness of minimum approximately 2 mm and maximum approximately 2.5 mm.

5. Baking tin according to claim 1, characterized in that the plastic material is a polyether sulphone.

6. Baking tin according to claim 1, characterized in that the plastic material is a polyethyl ether ketone.

7. Baking tin according to claim 1, characterized in that the plastic material is a polyethyl ether imide.

8. Baking tin according to any one of claims 1-3, characterized in that the baking tin is made of a plastic material containing 20-40 wt% fibrous reinforcing material.

9. Baking tin according to any one of claims 5-7, characterized in that the baking tin at the top is provided with a rim (6), which extends substantially parallel to the bottom (1).
